# EUROPEAN PATENT APPLICATION

(11) **EP 1 378 167 A1**
(43) Date of publication of application: **07.01.2004**
(21) Application number: 03014499.2
(22) Date of filing: 03.07.2003
(51) Int. Cl.: A21D 2/18, A21D 13/08

(54) **Baked goods product comprising alpha-D-glucopyranosyl-1,1-mannitol and process for manufacturing the same**

(30) Priority: 03.07.2002 JP 2002194812
(71) Applicant: Kabushiki Kaisha Ueno Seiyaku Oyo Kenkyujo, Osaka-shi Osaka-fu (JP)
(72) Inventor: Ueno, Ryuzo, Nishinomiya-shi, Hyogo-ken (JP); Honda, Junya, Nishinomiya-shi, Hyogo-ken (JP); Arai, Sho, Nishinomiya-shi, Hyogo-ken (JP)
(74) Representative: Albrecht, Thomas, Dr.

(57) **Abstract**

Baked goods products having crispy texture such as cookies and biscuits with improved moisture resistance are disclosed. The improvement can be achieved by substituting a part of or whole sweeteners contained in a dough for a conventional product with the sugar alcohol composition 70-100 wt% of α-D-glucopyranosyl-1,1-mannitol, and 30-0 wt% of α-D-glucopyranosyl-1,6-sorbitol and/or α-D-glucopyranosyl-1,1-sorbitol. The baked goods product obtained by baking the dough will exhibit an excellent moisture resistance.

## Description

### Technical Field

The present invention relates to a baked goods product having crispy texture with improved shelf stability, especially that exhibits enhanced moisture resistance.

### Background Art

Baked goods products with crispy texture, such as cookies and biscuits, made mainly from flour and/or starchy material and sweeteners, contain relatively low amount of moisture and therefore are highly hygroscopic. The hygroscopicy tends to result in a baked goods product that is soggy or, at best, uniformly moist and soft, and the commercial value of the same is then substantially reduced.

In order to prevent the degradation due to moisture, baked goods are usually sealed in airtight packages or packed with drying agent such as silica gel. In order to avoid environmental moisture after the packages are opened by a consumer, the products are often double packaged in such a manner that one to several pieces of the baked goods are sealed in a small package, and the small packages are packed together in a large bug.

Recently, sugar alcohol sweeteners have become very popular sugar substituent in the field of confectionary since they are gentler to teeth and contribute to fewer calories than sucrose. Among the sugar alcohols, commercially available reduced isomalutulose has been attracting an attention from the art for its improved functionally benefits including low hygroscopicity, high thermal-, acid- and alkaline-stability, and good compressibility as well as granulability. Further, it may contribute only low calories, does not cause cavities and hardly elicit an insulin response, while the sweetness is comparable to sucrose. Accordingly, reduced isomaltulose is used as sweetener or coating agent in many confectionery products including candies and tablet candies.

The reduced isomaltulose can be prepared by hydrogenating a mixture of isomaltulose and trehalulose, which is obtained from sucrose by means of transferase enzyme, under a certain condition. Hydrogenation of isomaltulose gives α-D-glucopyranosyl-1,1-mannitol and α-D-glucopyranosyl-1,6-sorbitol, and trehalulose gives α-D-glucopyranosyl-1,1-mannitol and α-D-glucopyranosyl-1,1-sorbitol. The commercially available reduced isomaltulose are generally prepared by isolating isomaltulose from the mixture by means of a conventional method such as chromatography or crystallization, and then the isolated isomaltulose is hydrogenated to give approximately equimolar mixture of α-D-glucopyranosyl-1,1-mannitol and α-D-glucopyranosyl-1,6-sorbitol.

Because of the low hygroscopicity of the commercially available reduced isomaltulose, it can enhance moisture resistance of baked goods products having crispy texture such as cookies and biscuits to some extent. However, the moisture resistance of the products is not enough and still needs drying agent and/or double packaging for longer time storage.

### SUMMARY OF THE INVENTION

An object of the present invention is to improve moisture resistance of a baked goods product having crispy texture. Another object of the present invention is to provide haked goods product having crispy texture with improved stability against moisture-induced degradation. Further object of the present invention to provide a method for manufacturing the baked goods product with enhanced moisture resistance.

The present inventors intensively studied on sugar substituents for a baked goods product and found that certain sugar alcohols could significantly improve shelf stability of the product in such a manner that the product could be stored relatively longer time with less moisture induced degradation.

Accordingly, the present invention provides an improved baked goods product having crispy texture which is obtained by baking a dough, the improvement consisting essentially of adding a sugar alcohol composition to the dough in an amount equal to or more than 60 wt% of total sweeteners in the dough on a dry weight basis, wherein said sugar alcohol composition comprises 70-100 wt% of α-D-glucopyranosyl-1,1-mannitol and 30-0 wt% of a compound selected from α-D-glucopyranosyl-1,6-sorbitol, α-D-glucopyranosyl-1,1-sorbitol and a mixture thereof on a dry weight basis.

The present invention also provides a method for manufacturing an improved baked goods product comprising the steps providing the improved dough defined as above and baking the same.

In other aspect of the present invention, the present invention provides a baked goods product having crispy texture which is obtained by baking a dough, wherein said dough comprises a sugar alcohol composition in an amount equal to or more than 60 wt% of total sweeteners in the dough on a dry weight basis, wherein said sugar alcohol composition comprises 70-100 wt% of α-D-glucopyranosyl-1,1-mannitol and 30-0 wt% of a compound selected from α-D-glucopyranosyl-1, 6-sorbitol, α-D-glucopyranosyl-1,1-sorbitol and a mixture thereof on a dry weight basis.

The present invention further provides a method for manufacturing a baked goods product having crispy texture which comprises the steps of providing the dough defined as above and baking the same.

According to the present invention, a baked goods product with crispy texture may be those prepared by baking a dough comprising at least flour and/or starch materials and a sweetener. Examples of flour and/or starch materials may include flours ground from wheat, barley, rye, corn, rice, buckwheat, millet, foxtail millet and Japanese barnyard millet, and starch materials such as potato flake, potato flour, corn starch and tapioca starch. Examples of the baked goods products may include, but not limited to, cookie, biscuit, cracker, wafer, snack food and Japanese flour cracker.

The sugar alcohol composition used in the present invention comprises 70-100 wt% of α-D-glucopyranosyl-1,1-mannitol (hereinafter referred as "GPM") and 30-0 wt% of α-D-glucopyranosyl-1,6-sorbitol (hereinafter referred as "GPS-6") and/or α-D-glucopyranosyl-1,1-sorbitol (hereinafter referred as "GPS-1") on a dry weight basis.

GPM has been known as a component of commercially available reduced isomaltulose, which consisting essentially of approximately equimolar GPM and GPS-6. The sugar alcohol composition used in the present invention comprises GPM in an amount equal to or more than about 70 wt%, preferably equal to or more than about 80 wt%, and more preferably about 85-99 wt% based on total amount of sweeteners in the dough on a dry weight basis.

The sugar alcohol composition used in the present invention may further comprise GPS-6 and/or GPS-1. The total amount of GPS-6 and GPS-1 should be 30-0 wt% and preferably 20-0 wt% based on total amount of sugar alcohol composition on a dry weight basis.

The sugar alcohol composition used in the present invention may be prepared from a conventionally obtained mixture of GPM, GPS-6 and GPS-1 by separating respective compound by means of a known process such as crystallization and chromatography and then, adjusting the proportions. An approximately equimolar mixture of GPM and GPS-6 is available on the market as "reduced isomaltulose" under the name of Palatinit™ (Shin Mitsui Sugar Co.Ltd., Tokyo, Japan) or IsoMaltidex™ (Celestar Japan Ltd., Tokyo, Japan). Said equimolar mixture may be separated and then re-mixed to give the above-defined proportions. Further, the sugar alcohol composition of the present invention may be obtained by simply mixing commercially available GPM, GPS-6 and GPS-1 respectively to give the above-defined proportions.

The sugar alcohol composition may further comprise one or more sugar alcohols other than GPM, GPS-6 or GPS-1, for example sorbitol and maltitol, up to 10 wt% based on total amount of the composition on a dry weight basis.

The sugar alcohol composition used in the present invention may be provided in any form including liquid, solution, crystal, granule and powder. Crystalline, granular and powdery compositions are preferable because they are easy to handle.

It is well known that sucrose is the most common sweetener in conventional baked goods products having crispy texture. According to the present invention, a conventional baked goods product can be improved by substituting at least a part of or all of the sweeteners contained in the dough for the product with the sugar alcohol composition defined as above. The baked goods product obtained by baking thus obtained dough exhibits enhanced moisture resistance and therefore, the product can enjoy longer shelf life.

The dough for the baked goods product may contain further sweeteners other than the sugar alcohol composition of the invention with or without sucrose. Examples of other sweeteners may include that known as strong-sweeteners such as stevia and scuralose.

The total amount the sweeteners in the dough may vary depending on the type of baked goods product to be prepared and desired sweetness of the product. The art can easily determine the amount. Typical baked goods dough comprises about 20-40 wt% of sweeteners.

The dough for the baked goods product of the present invention may be prepared by substituting at least a part of sweetener in a conventional baked goods dough with the sugar alcohol composition of the present invention. According to the present invention, the formulation of dough may be any of known one except for certain proportion of the sweetener is substituted with the sugar alcohol composition defined as above. The dough may comprise, if desired, eggs and fats and oils such as butter, margarine, shortening and vegetable oils in addition to flour and/or starch material and sweeteners. The dough may further comprise any components and additives, which are used in a conventional baked goods product. The formulation of the dough may be determined based on conventionally known recipes.

According to the method of the invention, the dough is baked to give a baked goods product. The baking condition, i.e. the temperature, time and the like, may vary depending on the type of the baked goods product to be prepared and the art can easily find an optimal condition based on conventional baked goods product manufacturing method. Thus obtained baked goods product provides excellent appearance and crispy texture, and exhibits excellent moisture resistance. Since the baked goods product of the present invention exhibits very low hygroscopicity, it is not necessary to be sealed together with a drying agent and/or packed in the "double packaging" manner. However, the scope of the invention also covers the baked goods product that sealed together with any kind of drying agent as well as those packed in the double packaging manner.

The present invention will be further illustrated by means of examples below. The present invention is not limited to those examples.

Without any specific indication, the "%" used in the following examples, represents "wt%".

### Examples 1 and Comparative examples 1-3

### Manufacture of Cookies.

Butter 45g at room temperature was admixed with a sugar alcohol composition 45g consisting of 89.9% of GPM, 9.6% of GPS-6, 0.3% of GPS-1 and 0.2% of sorbitol on a dry weight basis, and the mixture was beaten for 8 minutes with electric mixer (#MK-H3, Matsushita Electric Industries Co., Ltd. Osaka, Japan). Whole egg 6g was added thereto and the mixture was beaten for 2 minutes and then, milk 9g was added thereto and the mixture was beaten further 4 minutes. Soft flour 100g and baking powder 0.5g were sifted together, added in the mixture in three batches and worked with plastic spatula to fold the flour into the mixture. Thus obtained dough, which comprises approximately 16 % by weight of GPM, was wrapped with plastic film and stood for 15 minutes at 5°C. Then, the dough was rolled out and cut out shapes using cookie cutter to give pieces of approximately 40mm X 40mm x 4-5mm. They were baked in preheated oven at 180°C for 13 minutes to provide cookies.

In comparative examples 1-3, cookies were prepared according to the same way as above except for using sucrose, PALATINIT™ (Powder; approximately equimolar mixture of GPM and GPS-6; Shin Mitsui Sugar Industries Co., Ltd, Tokyo, Japan) or LESYS™ (Crystalline maltitol: Towa Chemical Industry Co., Ltd. Tokyo, Japan) instead of the sugar alcohol composition.

### Moisture Degradation Test

Thus obtained cookies were placed in an atmosphere of normal or high relative humidity and change of their texture was monitored every day. The non-wrapped cookies were placed in a chamber wherein relative humidity was 51%, 73% or 92% and temperature was 30 °C, and kept there. Two pieces of each were evaluated every 24 hours by eating the same. When the texture of at least one of the two was felt altered due to moisture, said group was evaluated as "degraded" and days until the cookie was degraded were recorded. Similar test was carried out at 52%, 70% and 90% RH and 45°C.

### Result

As is shown in Table 1 below, cookies containing high proportion of GPM exhibited better moisture resistance than others.

**TABLE 1**

| DAYS before the cookie was degraded | | | | | | | | |
|---|---|---|---|---|---|---|---|---|
| | | | 30°C | | | 45°C | | |
| | sweetener | GPM %^{*1} | RH 51% | RH 73% | RH 92% | RH 52% | RH 70% | RH 90% |
| Ex. 1 | GPM mix | 90 | 12 | 7 | 2 | 3 | 2 | 1 |
| Com. Ex.1 | sucrose | 0 | 6 | 3 | 1 | 1 | 1 | < 1^{*2} |
| Com. Ex.2 | PALATINIT™ | 47 | 10 | 3 | 2 | 1 | < 1 | < 1 |
| Com. Ex.3 | LESYS™ | 0 | 6 | 2 | 1 | < 1 | < 1 | < 1 |

| | | | | | | | | |
|---|---|---|---|---|---|---|---|---|
| *1: GPM content based on total sweeteners on a dry weight basis. | | | | | | | | |
| *2: <1 the cookie degraded in less than one day | | | | | | | | |

### Example 2 and Comparative Examples 4-6

### (Preparation of Japanese Style baked crackers)

Soft flour 31.3g, the sugar alcohol composition 45.0g comprising GPM 88.4%, GPS-6 10.5%, GPS-1 0.5% and Sorbitol 0.6%, on a dry weight basis, whole egg 7.8g, evaporated milk 2.2g, ground white sesame seed 2.3g, water 30.0g, vanillin 0.08g and sodium hydrogen carbonate 0.023g were combined together to give a lump-free dough. Each 4-6g of the dough was poured on a preheated electric barbecue plate and a weight was placed on the dough. One side of the dough was baked at 170 °C for 2.5 minutes and then turned and baked the other side for 2.0 minutes to give Japanese Style flour crackers.

In comparative examples 4-6, Japanese Style flour crackers were prepared according to the same way as above except for using sucrose, PALATINIT™ (Powder; approximately equimolar mixture of GPM and GPS-6; Shin Mitsui Sugar Industries Co., Ltd, Tokyo, Japan) or LESYST™ (Crystalline maltitol: Towa Chemical Industry Co., Ltd. Tokyo, Japan) instead of the sugar alcohol composition.

### Moisture Degradation Test

Thus obtained crackers were subjected to the moisture resistance test. The respective non-wrapped crackers were placed under the condition where relative humidity was 51%, 73% or 92% and temperature was 30°C. Texture of the respective crackers was determined everyday by eating the same. At each time of determination, three pieces of each were evaluated. Days until at least one of the three was evaluated as being degraded due to moisture were recorded. Similar test was carried out at 52%, 70% and 90% RH and 45°C.

### Result

As is shown in Table 2 below, crackers containing high proportion of GPM exhibited better moisture resistance than others.

**TABLE 2**

| DAYS before the cracker was degraded | | | | | | | | |
|---|---|---|---|---|---|---|---|---|
| | | | 30°C | | | 45°C | | |
| | Sweeteners | GPM %^{*1} | RH 51% | RH 73% | RH 92% | RH 52% | RH 70% | RH 90% |
| Ex. 2 | GPM mix | 90 | > 12^{*2} | > 12 | 3 | 3 | 2 | 1 |
| Com. Ex.4 | sucrose | 0 | 7 | 2 | 1 | 2 | 1 | <1^{*3} |
| Com. Ex. 5 | PALATINIT™ | 47 | 5 | 2 | 2 | 1 | < 1 | < 1 |
| Com. Ex.6 | LESYS™ | 0 | 2 | 1 | 1 | < 1 | < 1 | < 1 |

| | | | | | | | | |
|---|---|---|---|---|---|---|---|---|
| *1: GPM content based on total sweeteners on a dry weight basis. | | | | | | | | |
| *3: >12 the cookie did not degraded in 12 days | | | | | | | | |
| *2: <1 the cookie degraded in less than one day | | | | | | | | |

## Claims

1. Baked goods product having crispy texture which is obtained by baking a dough, wherein equal to or more than 60 wt% of total sweeteners in the dough on a dry weight basis is a sugar alcohol composition, wherein said sugar alcohol composition comprises 70-100 wt% of α-D-glucopyranosyl-1,1-mannitol, and 30-0 wt% of a compound selected from the group consisting of α-D-glucopyranosyl-1,6-sorbitol, α-D-glucopyranosyl-1,1-sorbitol and a mixture thereof on a dry weight basis.

2. A method for manufacturing baked goods product having crispy texture, which comprises the steps of:
providing a dough wherein equal to or more than 60 wt% of total sweeteners in the dough on a dry weight basis is a sugar alcohol composition, wherein said sugar alcohol composition comprises 70-100 wt% of α-D-glucopyranosyl-1,1-mannitol, and 30-0 wt% of a compound selected from the group consisting of α-D-glucopyranosyl-1,6-sorbitol, α-D-glucopyranosyl-1,1-sorbitol and a mixture thereof on a dry weight basis, and
baking the dough.

3. An improved baked goods product having crispy texture which is obtained by baking a dough, the improvement consisting essentially of adding a sugar alcohol composition to the dough in an amount equal to or more than 60 wt% of total sweeteners in the dough on a dry weight basis, wherein said sugar alcohol composition comprises 70-100 wt% of α-D-glucopyranosyl-1,1-mannitol, and 30-0 wt% of a compound selected from the group consisting of α-D-glucopyranosyl-1,6-sorbitol, α-D-glucopyranosyl-1,1-sorbitol and a mixture thereof on a dry weight basis.

4. An improved method for manufacturing a baked goods product having crispy texture which comprises the steps of providing a dough and baking the dough, the improvement consisting essentially of adding a sugar alcohol composition to the dough in an amount equal to or more than 60 wt% of total sweeteners in the dough on a dry weight basis, wherein said sugar alcohol composition comprises 70-100 wt% of α-D-glucopyranosyl-1,1-mannitol, and 30-0 wt% of a compound selected from the group consisting of α-D-glucopyranosyl-1,6-sorbitol, α-D-glucopyranosyl-1,1-sorbitol and a mixture thereof on a dry weight basis.
